# EUROPÄISCHE PATENTSCHRIFT

(11) **EP 1 232 990 B1**
(45) Veröffentlichungstag und Bekanntmachung des Hinweises auf die Patenterteilung: **02.11.2006**
(21) Anmeldenummer: 02002127.5
(22) Anmeldetag: 29.01.2002
(51) Int. Cl.: B66C 1/02, B65G 47/91

(54) **Einzelsteuerung für Sauggreifer in einem eine Vielzahl von Sauggreifern enthaltenden Ladegerät**
Individual control for suction gripper in a loading device with a plurality of suction grippers
Commande individuelle pour tête de préhension par dépression dans un appareil de chargement à plusieurs têtes de préhension par dépression

(30) Priorität: 15.02.2001 DE 10107001
(43) Veröffentlichungstag der Anmeldung: 21.08.2002
(73) Patentinhaber: Trumpf Sachsen GmbH, 01902 Neukirch (DE)
(72) Erfinder: Vogel, Klaus, 02681 Kirschau OT Rodewitz (DE)
(74) Vertreter: Kohler Schmid Möbus

(56) Entgegenhaltungen:
- EP-A- 0 603 396
- EP-A- 0 657 373
- DE-A1- 1 960 106
- GB-A- 923 724

## Beschreibung

Die Erfindung betrifft ein Ladegerät umfassend eine Vielzahl von Sauggreifern sowie eine Einzelsteuerung für Sauggreifer, wobei zu jedem einzeln gesteuerten Sauggreifer eine separate Druckleitung für Druckluft führt.

Ein derartiges Ladegerät dient zum Transport von Rohteilen wie auch zur programmgesteuerten Entnahme und Transport von bearbeiteten Fertigteilen aus dem bearbeiteten Rohteil.

Ladegeräte mit einer Vielzahl von Sauggreifern sind allgemein bekannt. So ist aus der DE 27 46 353 ein Vakuumlastträger für den Transport großdimensionaler Betonplatten bekannt, bei dem alle Sauger gleichzeitig in Tätigkeit sind. Ein gezieltes Vereinzeln von Fertigteilen aus einem bearbeiteten Rohteil ist nicht möglich.

Bekannt ist dazu aus der DE 196 46 186 A1 eine Vorrichtung zum Halten von Leiterplatten. Durch Vorschalten eines auf die Leiterplatte zugeschnittenen Selektionsteils vor eine mit einer Vielzahl von auf der Fläche verteilt angeordneten Saugeröffnungen versehene Saugerplatte werden nur die Saugeröffnungen aktiv, die von der zu haltenden Leiterplatte verschlossen werden. Diese Vorrichtung kann ohne Umrüstung nur für eine spezielle Leiterplattenserie eingesetzt werden.

Weiterhin ist es bekannt, durch Automatikventile die Sauger abzuschalten, die nicht beim Ansaugen verschlossen werden (DE 26 29 160 und DE 36 37 567 A1).

Aus EP 0657373 A2 ist ein Saugergestell bekannt, bei dem neben einem herkömmlichen Saugergestell weitere bewegliche Zusatzsauger angeordnet sind, die, wenn sie nicht benötigt werden, aus dem Saugerfeld herausgehoben werden. Damit ist eine Einstellung auf die Größe von Rohteilen möglich, jedoch keine problemlose Entnahme von Fertigteilen aus einem bearbeiteten Rohteil

Ein Ladegerät mit einer Mehrzahl gemeinschaftlich gesteuerter Sauggreifer ist offenbart in GB-A-923 724. In diesem Fall sind mehrere Sauggreifer an eine gemeinsame Kammer angeschlossen, die ihrerseits mit einem steuerbaren Verschluss versehen ist. Mittels eines schaltbaren Steuerventils kann die Kammer wahlweise mit einem Vakuum oder mit der freien Atmosphäre verbunden werden. Ist die Kammer an das Vakuum angeschlossen, so bewegt sich ihr Verschluss in eine Position, in welcher er das Innere der Kammer gegen die freie Atmosphäre abdichtet. In der Folge baut sich in der Kammer und an den mit der Kammer verbundenen Sauggreifern ein Unterdruck auf. Ladegut kann mittels der Sauggreifer angesaugt werden. Ist die Kammer über das Steuerventil mit der freien Atmosphäre verbunden, so werden die Kammer und die daran angeschlossenen Sauggreifer belüftet und zuvor angesaugtes Ladegut wird von den Sauggreifern freigegeben.

Aus dem Katalog der Firma Schmalz (Schmalz Gesamtkatalog Ausgabe 2000 S. 4.56 und 4.60), welcher dem Oberbegriff des unabhängigen Anspruchs 1 entspricht, ist es bekannt, durch Absperren des Druckausgangs eines Ejektors die zum Antrieb des Ejektors benutzte Druckluft in einen Sauggreifer umzuleiten und dadurch den Sauggreifer vom angesaugten Teil zu lösen. Dazu ist eine zweite Leitung zum Druckausgang des Ejektors notwendig.

Ziel und Aufgabe der Erfindung ist es, an einem Ladegerät mit einer Vielzahl von Sauggreifern eine Einzelsteuerung der Sauggreifer bereitzustellen, bei der mit einer einzigen Druckleitung zu jedem Sauggreifer dieser in die Funktionen Ansaugen, Ruhestellung und Abblasen steuerbar ist.

Erfindungsgemäß wird diese Aufgabe durch die Merkmale des 1. Patentanspruchs gelöst. Vorteilhafte Ausführungen der Erfindung sind Gegenstand der Unteransprüche.

Die Einzelsteuerung für die Sauggreifer in einem Ladegerät besteht aus einer zu jedem Sauggreifer führenden Druckleitung, die an einem in der Nähe des Sauggreifers befindlichen Ejektor endet. Im Ejektor wird der Unterdruck wie bekannt durch Ausströmen der Druckluft über eine Düse vor dem Ejektorausgang erzeugt. An diesem Ejektorausgang ist der Sauggreifer angeschlossen. Der Druckluftausgang ist durch ein steuerbares Ventil verschlossen. Ist der Druckluftausgang geöffnet, strömt Druckluft durch die Düse und erzeugt einen Unterdruck am Ejektorausgang. Der Sauggreifer saugt an. Ist der Druckluftausgang geschlossen, strömt die Druckluft durch den Ejektorausgang und löst den Sauggreifer von dem an ihm haftenden Gegenstand. Dieses Ventil kann durch Druckluft verschiedener Stärke betätigt werden, die dem Ejektor über die Druckluftleitung zugeführt wird. Dazu kann die Druckleitung über ein Umschaltventil an eine Druckluftleitung mit hohem Arbeitsdruck und an eine Druckluftleitung mit deutlich geringerem Abblasdruck umschaltbar angeschlossen sein, wobei der Abblasdruck auch durch Betätigen eines Sperrventils zur Ruhestellung für alle nicht benötigten Sauggreifer ganz abgeschaltete sein kann.

Vor der Düse im Ejektor kann sich ein Zweitweg für die Druckluft befinden, der zu einem den Druckluftausgang des Ejektors verschließenden Schieber führt. Dieser Schieber ist durch eine Verschlußkraft vorgespannt, die einem Druck entspricht, der geringer als der Arbeitsdruck jedoch größer als der Abblasdruck ist. Liegt der Arbeitsdruck am Ejektor, wird über den Zweitweg der Schieber gegen die Verschlusskraft verschoben und der Druckluftausgang geöffnet. Der mit diesem Ejektor verbundene Sauggreifer saugt an. Liegt Abblasdruck an, ist der Druckluftausgang mittels der Verschlusskraft durch den Schieber verschlossen. Die Druckluft mit Abblasdruck strömt durch den Ejektorausgang in den Sauggreifer.

Durch die Steuerung der Umschaltventile können die Sauggreifer separat gesteuert werden, so dass entsprechend dem Arbeitsprogramm die Fertigteile in der Arbeitsmaschine gegriffen und ausgetragen werden. Dabei ist nur eine Druckleitung zu jedem Sauggreifer notwendig, so dass der Aufbau der Ladegeräte relativ einfach ist. Fehlfunktionen der Sauggreifer werden durch das Abblasen in den nicht benötigten Sauggreifern vermieden.

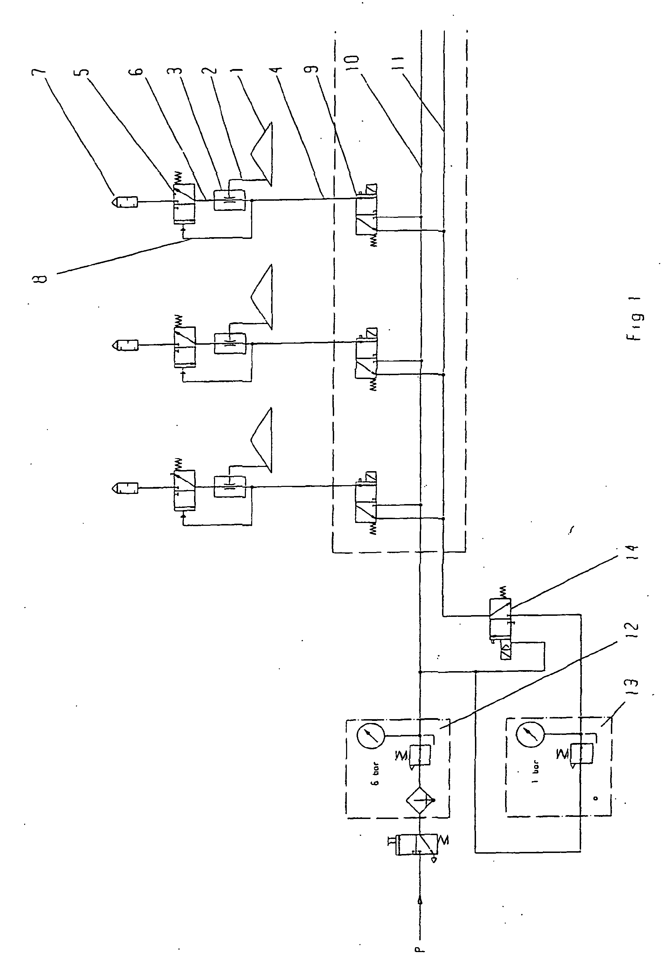

Die Erfindung soll nachstehend anhand eines Ausführungsbeispiels näher erläutert werden. Die zugehörige Zeichnung zeigt in
- Fig. 1: ein Schaltbild einer erfindungsgemäßen Einzelsteuerung für Sauggreifer
- Fig. 2: einen Ejektor mit Zweitweg im Schnitt.

Ein Sauggreifer 1 ist über einen Ejektorausgang 2 mit einem in unmittelbarer Nähe befindlichen Ejektor 3 verbunden. Der Ejektor 3 ist an einer Druckleitung 4 angeschlossen. Dem Ejektor 3 folgt ein steuerbares Ventil 5, das sich vor einem Druckluftausgang 6 befindet. Dem Ventil 5 folgt ein Schalldämpfer 7. An der Druckleitung 4 ist vor dem Ejektor 3 ein Zweitweg 8 zur Steuerung des Ventils 5 angeschlossen. Die Druckleitung 4 ist über ein Umschaltventil 9 mit einer Druckluftleitung 10 mit hohem Arbeitsdruck und einer Druckluftleitung 11 mit geringerem Abblasdruck umschaltbar verbunden. Die Druckluft in der Druckluftleitung 10 wird von einem Drucklufterzeuger 12 geliefert. An der Druckluftleitung 10 ist ein Druckminderer 13 angeschlossen, dem über ein Sperrventil 14 die Druckluftleitung 11 mit Abblasdruck folgt.

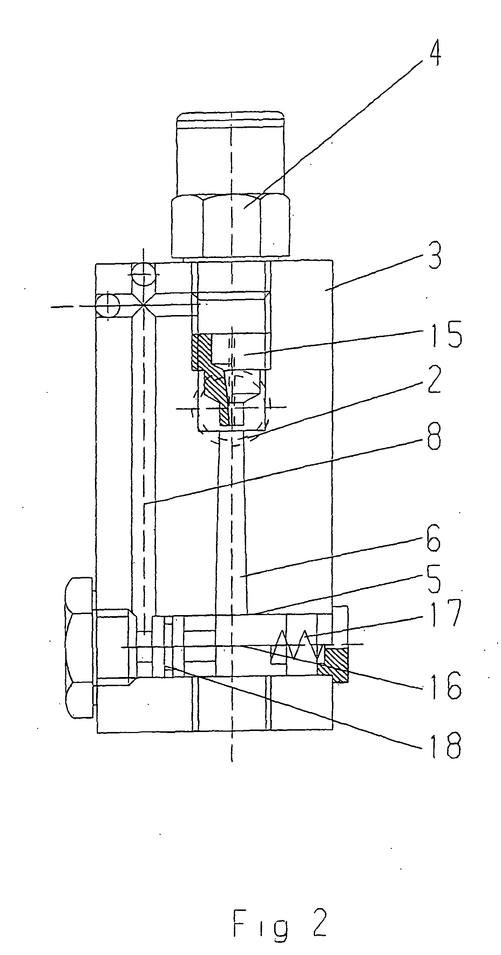

In Fig. 2. ist ein kompakter Ejektor 3 mit dem Zweitweg 8 und dem steuerbaren Ventil 5 dargestellt. Der Ejektor 3 ist an der Druckleitung 4 angeschlossen. Im Ejektor 3 befindet sich eine Düse 15 vor dem Ejektorausgang 2. Vor der Düse 15 zweigt der Zweitweg 8 ab, der zum steuerbaren Ventil 5 führt. Das Ventil 5 besteht aus einem Schieber 16, der den Druckluftausgang 6 verschließt, einer gegen den Schieber 16 drückenden Feder 17 und einem Kolben 18.

Die Umschaltventile 9 werden entsprechend dem Arbeitsprogramm einer zugeordneten Bearbeitungsmaschine gesteuert. Je nachdem, ob ein Fertigteil entnommen oder ein Reststück verbleiben soll, wird die Druckleitung 4 an die Druckluftleitung 10 oder an die Druckluftleitung 11 geschaltet. Von der Druckluftleitung 10 wird Arbeitsdruck geliefert. Dieser Arbeitsdruck öffnet über den Zweitweg 8 den Druckluftausgang 6 des Ejektors 3, indem der Schieber 15 gegen die Feder 17 verschoben wird. Die Druckluft mit Arbeitsdruck strömt nun durch die Düse 15 und erzeugt vor dem Ejektorausgang 2 Unterdruck. Der Sauggreifer 1 saugt an.

Ist die Druckleitung 4 mit der Druckleitung 11 verbunden, wird dem Ejektor 3 Druckluft mit wesentlich geringen Abblasdruck geliefert. Dieser Druck reicht nicht aus, den Schieber 16 gegen die Feder 17 zu verschieben. Der Druckluftausgang 6 bleibt verschlossen. Druckluft mit Abblasdruck strömt durch die Düse 15 und den Ejektorausgang 2 in den Sauggreifer 1, der sich nun vom gegriffenen Teil löst bzw. kein Teil ansaugen kann. Zur Ruhestellung bestimmter Sauggreifer 1 wird das Sperrventil 14 geschlossen. Die Druckluftleitung 11 ist jetzt druckfrei. Alle über das Umschaltventil 9 an die Druckluftleitung 11 angeschlossenen Sauggreifer 1 befinden sich nun in Ruhestellung.

### Aufstellung der verwendeten Bezugszeichen

- 1: Sauggreifer
- 2: Ejektorausgang
- 3: Ejektor
- 4: Druckleitung
- 5: Ventil
- 6: Druckluftausgang
- 7: Schalldämpfer
- 8: Zweitweg
- 9: Umschaltventil
- 10: Druckluftleitung
- 11: Druckluftleitung
- 12: Drucklufterzeuger
- 13: Druckminderer
- 14: Sperrventil
- 15: Düse
- 16: Schieber
- 17: Feder
- 18: Kolben

## Patentansprüche

1. Ladegerät umfassend eine Vielzahl von Sauggreifern (1) sowie eine Einzelsteuerung für Sauggreifer (1), wobei zu jedem einzeln gesteuerten Sauggreifer (1) eine separate Druckleitung (4) für Druckluft führt, **dadurch gekennzeichnet, dass** eine einzige Druckleitung (4) zu einem von der Druckluft aktivierbaren Ejektor (3) führt, dessen Ejektorausgang (2) an den zugeordneten Sauggreifer (1) angeschlossen und dessen Druckluftausgang (6) durch ein steuerbares Ventil (5) verschließbar ist, das über die Druckleitung (4) durch Druckluft verschiedener Stärke betätigbar ist.

2. Ladegerät nach Anspruch 1, **dadurch gekennzeichnet, dass** die Druckleitung (4) über ein Umschaltventil (9) an eine Druckluftleitung (10) mit hohem Arbeitsdruck und an eine Druckluftleitung (11) mit deutlich geringerem Abblasdruck umschaltbar angeschlossen, dass die Druckluftleitung (10) mit Arbeitsdruck direkt an einem Drucklufterzeuger (12) und dass die Druckluftleitung (11) mit Abblasdruck über ein Sperrventil (14) und einem Druckminderer (13) an dem Drucklufterzeuger (12) angeschlossen ist.

3. Ladegerät nach Anspruch 1 oder 2, **dadurch gekennzeichnet, dass** die Druckleitung (4) über ein Dreiwegeventil an die Druckluftleitung (10) mit Arbeitsdruck und an die Druckluftleitung (11) mit Abblasdruck angeschlossen ist.

4. Ladegerät nach einem der Ansprüche 1 bis 3, **dadurch gekennzeichnet, dass** der Ejektor (3) eine von der Druckluft durchströmte Düse (15) enthält, der die Ejektorausgangsöffnung folgt, dass sich vor der Düse (15) ein zu einem Schieber (16) führender Zweitweg (8) befindet und dass der Schieber, der mit einer Kraft vorgespannt ist, die einem unter dem Arbeitsdruck liegenden Druck entspricht, den Druckluftausgang (6) versperrt, wenn ein Druck anliegt, der unter dem Arbeitsdruck liegt.

5. Ladegerät nach einem der Ansprüche 2 bis 4, **dadurch gekennzeichnet, dass** die Umschaltventile (9) an den Druckluftleitungen (10, 11) dem Arbeitsprogramm der bedienten Arbeitsmaschine entsprechend gesteuert sind.

## Claims

1. Loading device comprising a plurality of suction grippers (1) and an individual control unit for suction grippers (1), a separate pressure line (4) for compressed air leading to each individually controlled suction gripper (1), **characterised in that** a single pressure line (4) leads to an ejector (3) which can be activated by the compressed air and whose ejector outlet (2) is connected to the associated suction gripper (1) and whose compressed air outlet (6) can be closed by a controllable valve (5) which can be actuated via the pressure line (4) by compressed air of different strengths.

2. Loading device according to claim 1, **characterised in that** the pressure line (4) is connected via a switching valve (9) to a compressed air line (10) having a high working pressure and to a compressed air line (11) having a substantially lower discharge pressure, **in that** the compressed air line (10) having working pressure is connected directly to a compressed air generator (12) and **in that** the compressed air line (11) having discharge pressure is connected to the compressed air generator (12) via a closure valve (14) and a pressure reduction means (13).

3. Loading device according to claim 1 or 2, **characterised in that** the pressure line (4) is connected via a 3-way valve to the compressed air line (10) having working pressure and to the compressed air line (11) having discharge pressure.

4. Loading device according to any one of claims 1 to 3, **characterised in that** the ejector (3) contains a nozzle (15) through which the compressed air flows and downstream of which the ejector outlet opening is arranged, **in that** a secondary path (8) which leads to a pushing member (16) is located upstream of the nozzle (15) and **in that** the pushing member which is pre-stressed with a force which corresponds to a pressure which is less than the working pressure closes the compressed air outlet (6) when a pressure is provided that is less than the working pressure.

5. Loading device according to any one of claims 2 to 4, **characterised in that** the switching valves (9) are controlled at the compressed air lines (10, 11) in accordance with the work program of the processing machine being operated.

## Revendications

1. Appareil de chargement comprenant une pluralité de pinces ou têtes aspirantes (1) ainsi qu'une commande individuelle pour les pinces ou têtes aspirantes (1), sachant qu'une conduite séparée de pression (4) pour de l'air comprimé mène à chaque pince ou tête aspirante (1) individuellement commandée, **caractérisé en ce qu'**une unique conduite de pression (4) mène à un éjecteur (3) pouvant être activé par l'air comprimé, dont la sortie d'éjecteur (2) est raccordée à la pince ou tête aspirante associée (1) et dont la sortie d'air comprimé (6) peut être fermée par une soupape asservissable (5) qui peut être actionnée via la conduite de pression (4) par de l'air comprimé de puissance variable.

2. Appareil de chargement selon la revendication 1, **caractérisé en ce que** la conduite de pression (4) est raccordée, de façon commutable via une soupape de commutation (9), à une conduite d'air comprimé (10) de pression de travail élevée et à une conduite d'air comprimé (11) de pression d'évacuation nettement inférieure, **en ce que** la conduite d'air comprimé (10) à pression de travail est directement raccordée à un compresseur d'air (12) et **en ce que** la conduite d'air comprimé (11) à pression d'évacuation est raccordée au compresseur d'air (12) via une soupape d'isolement (14) et un détendeur (13).

3. Appareil de chargement selon la revendication 1 ou 2, **caractérisé en ce que** la conduite de pression (4) est raccordée à la conduite d'air comprimé (10) à pression de travail et à la conduite d'air comprimé (11) à pression d'évacuation via une soupape à trois voies.

4. Appareil de chargement selon l'une des revendications 1 à 3, **caractérisé en ce que** l'éjecteur (3) comprend une buse (15) qui est traversée par le flux d'air comprimé et à laquelle l'ouverture de sortie de l'éjecteur fait suite, **en ce qu'**une voie de dérivation (8) menant à un tiroir (16) se trouve avant la buse (15), et **en ce que** le tiroir, qui est précontraint par une force qui correspond à une pression inférieure à la pression de travail, ferme la sortie d'air comprimé (6) en présence d'une pression qui est inférieure à la pression de travail.

5. Appareil de chargement selon l'une des revendications 2 à 4, **caractérisé en ce que** les soupapes de commutation (9) sur les conduites d'air comprimé (10, 11) sont commandées en fonction du programme de travail de la machine de travail desservie,
